# EUROPEAN PATENT APPLICATION

(11) **EP 4 011 933 A1**
(43) Date of publication of application: **15.06.2022**
(21) Application number: 21170884.7
(22) Date of filing: 28.04.2021
(51) Int. Cl.: C08G 63/127, C08G 63/183, C08G 63/668, C08G 63/672, C08G 63/91, C08J 11/24, C11D 3/37

(54) **IMPROVED BIODEGRADABLE POLYMER WITH PRIMARY WASHING PERFORMANCE BENEFIT**

(30) Priority: 11.12.2020 EP 20213443
(71) Applicant: BASF SE, 67056 Ludwigshafen am Rhein (DE)
(72) Inventor: DE, Swati, 67056 Ludwigshafen (DE); WITTELER, Helmut, 67056 Ludwigshafen (DE); ESPER, Claudia, 67056 Ludwigshafen (DE); SCHADE, Christian, 67056 Ludwigshafen (DE); HUEFFER, Stephan, 67056 Ludwigshafen (DE)
(74) Representative: BASF IP Association

(57) **Abstract**

The present invention relates to novel polymers ("polymer (P1)") obtainable by a process comprising the steps a) to c). According to step a), a polymer (P2) is provided. The polymer (P2) is obtainable by polymerization of a first dicarboxylic acid (A1) with a first diol (D1). Said polymer (P2) is hydrolyzed in step b) with a second diol (D2) in order to obtain a hydrolyzed polymer (P3). Afterwards, the hydrolyzed polymer (P3) is reacted with a second dicarboxylic acid (A2) which is different to the first dicarboxylic acid (A1), in order to obtain said polymer (P1). The present invention further relates to a process for obtaining such a polymer (P1). Furthermore, the present invention relates to the use of such a polymer (P1) within, for example, fabric and home care products. Another subject-matter of the present invention are fabric and home care products as such, containing such a polymer (P1).

## Description

The present invention relates to novel polymers (hereinafter also called "polymer(s) (P1)") obtainable by a process comprising the steps a) to c). According to step a), a polymer (P2) is provided. The polymer (P2) is obtainable by polymerization of a first dicarboxylic acid (A1) with a first diol (D1). Said polymer (P2) is hydrolyzed in step b) with a second diol (D2) in order to obtain a hydrolyzed polymer (P3). Afterwards, the hydrolyzed polymer (P3) is reacted with a second dicarboxylic acid (A2) which is different to the first dicarboxylic acid (A1), in order to obtain said polymer (P1). The present invention further relates to a process for obtaining such a polymer (P1). Furthermore, the present invention relates to the use of such a polymer (P1) within, for example, fabric and home care products. Another subject-matter of the present invention are fabric and home care products as such, containing such a polymer (P1).

US-A 2015/0218491 relates to the use in washing and cleaning agents of one or a plurality of polyesters which can be obtained by polymerization of a) terephthalic acid dimethyl ester, and b) ethylene glycol, and c) 1,2-propylene glycol, and d) one or a plurality of polyethylene glycols with mass-average molecular weights in the range from 1000 to 2000 g/mol, and e) a methyl polyethylene glycol with a mass-average molecular weight in the range from 1050 to 1350 g/mol, f) either in the presence of or in the absence of one or a plurality of cross-linking compounds with 3 to 6 polycondensation-capable functions. The polyesters are particularly suited for use in the washing and cleaning agents as dispersants or as soil release polymers.

A similar type of polyesters is disclosed in US-A 2015/0204018, but with different use since they are intended for the paper industry instead of the use of washing and cleaning agents as described in the previous paragraph.

WO 2019/105938 relates to a renewably sourced soil release polyesters comprising two or more structural units according to general formula (a1), one or more structural units according to general formula (a2) and either one or two terminal structural groups according to general formula (a3). Besides the mandatory furanyl-based unit (a1), the respective polyester may additionally contain a terephthalate-based structural unit (a4).

US-A 2011/0098418 relates to additives for detergents and cleaning agents. Said additives have a similar chemical structure as those described above for US-A 2015/0218491 and US-A 2015/0204018, respectively.

Specific terephthalic polyester compositions and their use as soil release agent are disclosed in US-B 6,579,837. The respective composition contains two different types of PET-based polyesters. This document also discloses a process for preparing such PET polyesters by transesterification/condensation reaction as well as suitable transesterification catalyst employed therein.

WO 2018/028934 discloses a stable liquid detergent comprising soil release polymers. The respective liquid detergent composition, in particular a heavy duty liquid detergent, is clear or translucent and an esthetically appealing and comprises surfactant, propylene glycol and at least one soil release polymer (SRP). The soil release polymers are PET-type polymers.

US-A 2019/0100716 relates to the use of branched polyesters obtainable by polycondensation of citric acid with at least one polyalcohol, and optionally with polycarboxylic acid component as additive in washing compositions, cleaners, detergents or a formulation for water treatment and to mixtures comprising such branched polyesters. The invention further relates to the use of hydrophobically modified branched polyesters; and to the method for cleaning, washing or water treatment using such branched polyesters.

Polyethylene terephthalate (PET) is a well-known thermoplastic polyester, which is employed, among others, for the production of plastic bottles. Specific information of chemical and physical properties of PET as well as methods for producing PET can be obtained, for example, from the online encyclopedia "Wikipedia", searching for the term "polyethylene terephthalate" (see German version under https://de.wikipedia.org/wiki/polyethylenterephthalat; search on December 8, 2020).

The object of the present invention is to provide novel polymers. Furthermore, these novel polymers should have beneficial properties in respect of biodegradability and/or their washing behavior, when being employed within compositions such as cleaning compositions.

This object is achieved by a polymer (P1) obtainable by a process comprising steps a) to c) as follows:
a) providing a polymer (P2) obtainable by polymerization of i) at least one first dicarboxylic acid (A1) or an anhydride, an ester or a salt thereof and ii) at least one first diol (D1),
b) hydrolyzing the polymer (P2) with at least one second diol (D2) at a temperature in the range of 100 to 300°C in the presence of a catalyst in order to obtain a hydrolyzed polymer (P3),
c) reacting the hydrolyzed polymer (P3) with at least one second dicarboxylic acid (A2) or an anhydride, an ester or a salt thereof in order to obtain the polymer (P1), wherein the second dicarboxylic acid (A2) is different to the first dicarboxylic acid (A1) employed in step a).

The polymers (P1) according to the present invention may be used, for example, within cleaning compositions and/or fabric and home care products. They lead to an at least comparable and preferably even improved anti redeposition and cleaning performance within such compositions or products, for example in respect of redeposition of soils and removing of stains, compared to corresponding polymers according to the prior art. Beyond that, the polymers (P1) according to the present invention lead to an improved biodegradability when being employed within such compositions or products, for example within cleaning compositions and/or fabric and home care products. Polymers (P1) with enhanced biodegradation according to the present invention can be used advantageously in washing and cleaning compositions, where they support the removal of hydrophobic soils from textile or hard surfaces by the surfactants and thus improve the washing and cleaning performances of the formulations. Moreover, the polymers (P1) provide an improved primary washing performance and different stains, such as bleachable stains, protease, relevant stains, fatty oil and sebum stains.

Another advantage of the polymers (P1) of the present invention is the improved solubility performance since they are soluble in solvents such as water. In contrast to that, many polymers known in the prior art, such as polyesters like PET, are insoluble in water. Instead, PET is a well-known polymer to be employed in the production of plastic articles such as water bottles. The polymers (P1) of the present invention can be easily synthesized from, for example, used PET articles such as used PET bottles. By consequence, used PET articles (as well as comparable plastics) can be easily recycled in order to obtain a new class of polymers according to the present invention.

For the purposes of the present invention, definitions such as C₁-C₁₀-alkyl, as defined for example, for the substituent of the first dicarboxylic acid (A1), mean that this substituent (radical) is an alkyl radical having from 1 to 10 carbon atoms. The alkyl radical can be either linear or branched or optionally cyclic. Alkyl radicals which have both a cyclic component and a linear component likewise come within this definition. The same applies to other alkyl radicals such as a C₁-C₄-alkyl radical. Examples of alkyl radicals are methyl, ethyl, n-propyl, sec-propyl, n-butyl, sec-butyl, isobutyl, 2-ethylhexyl, tert-butyl (tert-Bu/t-Bu), pentyl, hexyl, heptyl, cyclohexyl, octyl, nonyl or decyl.

The term "C₁-C₁₀-alkylene" as used herein refers to a saturated, divalent straight chain or branched hydrocarbon chains of 1, 2, 3, 4, 5, 6 or up to 10 carbon groups, examples including methane-diyl (methylene), ethane-1,2-diyl ("ethylene"), propane-1,3-diyl, propane-1,2-diyl, 2-methylpropane-1,2-diyl, 2,2-dimethylpropane-1,3-diyl, butane-1,4-diyl, butane-1,3-diyl (= 1-methylpropane-1,3-diyl), butane-1,2-diyl ("1,2-butylene"), butane-2,3-diyl, 2-methyl-butan-1,3-diyl, 3-methyl-butan-1,3-diyl (= 1,1-dimethylpropane-1,3-diyl), pentane-1,4-diyl, pentane-1,5-diyl, pentane-2,5-diyl, 2-methylpentane-2,5-diyl (= 1,1-dimethylbutane-1,3-diyl) and hexane-1,6-diyl.

For the purposes of the present invention, the term "aryl", as defined above for, for example, the radical Ar in formula (II), means that the substituent (radical) is an aromatic ("ar") compound/fragment without any heteroatoms such as O, N, S in the aromatic part. The aromatic residue can be a monocyclic, bicyclic or optionally polycyclic aromatic. In the case of polycyclic aromatics, individual rings can optionally be fully or partially saturated. All substituents "aryl" have two bonds which connect the respective aromatic fragment with other fragments of the respective polymer/polyester. Preferred examples of aryl are phenylene, naphthylene or anthracylene, in particular phenylene. In case that phenylene is preferred, it is 1,4-phenylene.

The invention is specified in more detail as follows.

The first subject-matter of the present invention relates to polymers (P1) obtainable by a process comprising the steps a) to c) as follows:
a) providing a polymer (P2) obtainable by polymerization of i) at least one first dicarboxylic acid (A1) or an anhydride, an ester or a salt thereof and ii) at least one first diol (D1),
b) hydrolyzing the polymer (P2) with at least one second diol (D2) at a temperature in the range of 100 to 300°C in the presence of a catalyst in order to obtain a hydrolyzed polymer (P3),
c) reacting the hydrolyzed polymer (P3) with at least one second dicarboxylic acid (A2) or an anhydride, an ester or a salt thereof in order to obtain the polymer (P1), wherein the second dicarboxylic acid (A2) is different to the first dicarboxylic acid (A1) employed in step a).

According to step a) of the process for producing the inventive polymers (P1), a polymer (P2) is provided. The polymer (P2) as such is known to persons skilled in the art. The polymer (P2) is obtainable by polymerization of i) at least one first dicarboxylic acid (A1) or an anhydride, an ester or a salt thereof and ii) at least one first diol (D1). The polymerization process for obtaining the polymer (P2) as well as the compounds/monomers employed within said polymerization process is known to persons skilled in the art. Such polymerization processes, in particular for obtaining polyesters, are described, for example, in US-A 2015/0218491 or US-B 6,579,837.

The polymer (P2) may be provided as a single polymer or also as a mixture of two or more different polymers (P2). The polymer (P2) is preferably a terephthalate-based polymer such as polyethylene terephthalate (PET). As described above, such type of polymers, in particular PET polymers, are well known in the prior art and are commercially available.

It is preferred in the context of the present invention that the polymer (P2) is polyethylene terephthalate (PET) or recycled polyethylene terephthalate (recycled PET), preferably recycled PET.

The at least one first dicarboxylic acid (A1) employed for obtaining the polymer (P2) is also well known in the prior art. Any dicarboxylic acid known to a skilled person, or an anhydride, an ester or a salt thereof may be employed in the context of the present invention. Examples of such dicarboxylic acids (A1) are terephthalic acid, succinic acid, adipic acid, isophthalic acid, naphthalene 1,4-, 2,3-, and 2,6-dicarboxylic acid, malonic acid, glutaric acid, 2-methylglutaric acid, 3-methylglutaric acid, pimelic acid, azelaic acid, sebacic acid, undecanedioic acid, dodecanedioic acid, brassylic acid, tetradecanedioic acid, fumaric acid, 2,2-dimethylglutaric acid, suberic acid, maleic acid and itaconic acid.

It is quite common that instead of the dicarboxylic acid (A1) as such, a corresponding anhydride, ester or salt thereof are employed within the polymerization process. In case of the terephthalic acid, it is preferred to employ a corresponding ester, in particular dimethyl terephthalate, within the polymerization as such. The same can also be applied for any other dicarboxylic acid as described above for an example of dicarboxylic acids (A1).

It is preferred that the first dicarboxylic acid (A1) is an aromatic dicarboxylic acid optionally substituted with at least one C₁-C₁₀-alkyl substituent on its aromatic fragment or an anhydride, an ester or a salt thereof, preferably selected from terephthalic acid, phthalic acid, isophthalic acid or an anhydride, an ester or a salt of the before mentioned acids, most preferably terephthalic acid or an ester thereof.

The at least one first diol (D1) employed within the polymerization for obtaining a polymer (P2) can also be any diol known to a person skilled in the art. Examples of such diols are polyethylene glycol 600 (CAS 25322-68-3), polyethylene glycol 200, polyethylene glycol 1000, polyethylene glycol 1500, polypropylene glycol, EO-PO-block polymer, dipropylene glycol, tripropylene glycol, 1,2-butanediol,1,4-butanediol, 1,5-pentanediol, 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propane diol or 2,2,4-trimethyl-1,6-hexanediol.

The before mentioned diols are usually commercially available. Polyethylene glycols are, for example, commercially available under the trademark/series name "Pluriol", such as "Pluriol E 600" from BASF SE (Ludwigshafen, Germany).

It is preferred that the first diol (D1) is selected from C₂-C₁₀-diol or a polyalkylene glycol, preferably the first diol (D1) is 1,2-ethane diol.

Step b) is carried out by hydrolyzing the polymer (P2) with at least one second diol (D2) at a temperature in the range of 100 to 300°C in the presence of a catalyst in order to obtain a hydrolyzed polymer (P3).

In case recycled/used material is employed as polymer (P2) in the hydrolyzation step b), such as recycled/used PET, in particular used PET bottles, it is possible to first mechanically transfer such used material, in particular PET bottles, into smaller parts. This can preferably be carried out by simply cutting the used/recycled PET material into smaller parts.

The second diol (D2) employed within step b) can be any diol known to a skilled person, as exemplified above in the context of the first diol (D1). It is preferred that the second diol (D2) is selected from C₂-C₁₀-diol or a polyalkylene glycol, preferably selected from 1,2-propane diol, 1,3-propane diol or a polyethylene glycol, more preferably selected from polyethylene glycol with a weight-average molecular weight in the range from 100 to 2 000 g/mol, and most preferably selected from polyethylene glycol with a weight-average molecular weight in the range from 150 to 700 g/mol.

It is also preferred that the second diol (D2) is different to the first diol (D1) employed in step a). This means that, for example, in step a), 1,2-ethane diol is employed as first diol (D1). By consequence, said 1,2-ethane diol cannot be employed as second diol (D2) within this preferred embodiment. Instead, a polyethylene glycol may be employed as second diol (D2). The same holds true in case that two or more diols are employed as first diol (D1) and/or two or more diols are employed as second diol (D2).

Step b) is preferably carried out at a temperature in the range of 150 to 250°C, more preferably in the range of 200 to 230°C.
The catalyst employed within step b) can be any suitable catalyst known to a skilled person for hydrolyzing polymers, in particular for hydrolyzing polyesters, such as a transesterification/condensation catalyst. Examples of such catalysts are disclosed in US-B 6,579,837.

It is preferred in step b) that the catalyst is selected from an aluminum-based catalyst, a titanium-based catalyst or an alkali acetate, preferably the catalyst is Titanium (IV) isopropoxide.

It is also preferred that the hydrolyzation is carried out in a time range of 5 to 25 hours and/or under inert gas.

The hydrolyzed polymer (P3) obtained in step b) may either be a single polymer or a mixture of two or more individual polymers (P3). It is preferred that the hydrolyzed polymer (P2) obtained in step b) comprises at least one component according to general formula (I) 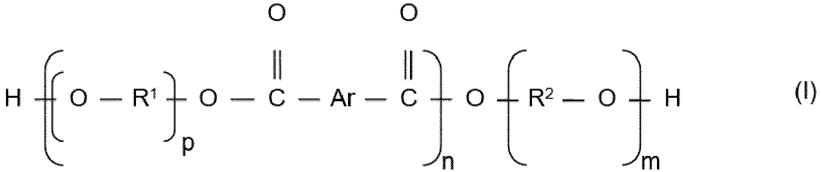 in which the variables are defined as follows:
- R¹: represents linear of branched C₂-C₁₀-alkylene radicals,
- Ar: represents aryl,
- R²: represents linear of branched C₂-C₁₀-alkylene radicals,
- p: is an integer having a value in the range of 1 to 20,
- n: is an integer having a value in the range of 1 to 5,
- m: is an integer having a value in the range of 1 to 20.

It is preferred that the hydrolyzed polymers (P2) according to the general formula (I) are defined as follows:
- R¹: is 1,2-ethylene or 1,2-propylene, preferably 1,2-ethylene,
- Ar: is phenylene or naphthylene, preferably 1,4-phenylene,
- R²: is 1,2-ethylene or 1,2-propylene, preferably 1,2-ethylene,
- p: is 1,
- n: is an integer having a value in the range of 1 to 3, preferably n is 1 or 2,
- m: is an integer having a value in the range of 3 to 10.

It is even more preferred that the hydrolyzed polymer obtained in step b) comprises at least one component according to general formula (Ia) 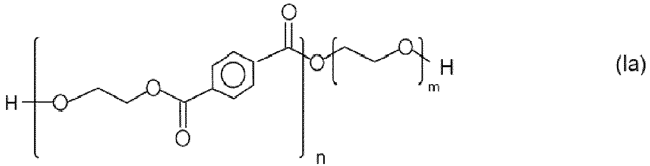 in which the variables are defined as follows:
- n: is an integer having a value in the range of 1 to 5,
- m: is an integer having a value in the range of 1 to 20.

It is preferred that within formula (Ia) the variables are defined as follows:
- n: is an integer having a value in the range of 1 to 3, preferably n is 1 or 2,
- m: is an integer having a value in the range of 3 to 10.

Step c) is carried out by reacting the hydrolyzed polymer (P3) with at least one second dicarboxylic acid (A2) or an anhydride, an ester or a salt thereof in order to obtain the polymer (P1), wherein the second dicarboxylic acid (A2) is different to the first dicarboxylic acid (A1) employed in step a).

As second dicarboxylic acid (A2), any dicarboxylic acid known by a person skilled in the art can be employed, as discussed above in the context of the first dicarboxylic acid (A1). However, the second dicarboxylic acid (A2) employed within step c) has to be different compared to the first dicarboxylic acid (A1) employed for obtaining the polymer (P2). The same holds true in case that two or more first dicarboxylic acids (A1) and/or two or more second dicarboxylic acids (A2) are employed in the respective steps. This also applies to the derivatives of the respective dicarboxylic acids, such as the corresponding anhydrides, esters and/or salts thereof. For example, in case terephthalic acid is employed as first dicarboxylic acid (A1) to obtain the polymer (P2) provided within step a), it is not possible to use, for example, a corresponding ester of terephthalic acid (terephthalate) as second dicarboxylic acid (A2) within step c) for obtaining the polymer (P1). Instead, tartaric acid or an ester thereof may, for example, be employed as second dicarboxylic acid (A2) in case terephthalic acid or an ester thereof is employed as first dicarboxylic acid (A1) within step a).

It is preferred that the second dicarboxylic acid (A2) is a linear or a branched C₁-C₁₀-alkylene dicarboxylic acid optionally substituted with at least one OH-group or an anhydride, an ester or a salt thereof, preferably selected from tartaric acid, succinic acid, adipic acid or an anhydride, an ester or a salt thereof, most preferably the second dicarboxylic acid (A2) is tartaric acid.

It is also preferred in step c) that the reaction is carried out in a time range of 5 to 40 hours.
It is also preferred in step c) that the temperature is in the range of 80 to 200°C, more preferably in the range of 120 to 170°C.
It is also preferred in step c) that the reaction is carried out under inert gas and/or vacuum condition.

The inventive polymer (hereinafter also called "polymer (P1)") obtained in step c) may have any molecular weight known to a person skilled in the art. It is preferred that the polymer (P1) has a weight average molecular weight M_{w} in the range of 50 000 to 1 000 000 g/mol, preferably in the range of 50 000 to 500 000 g/mol, and most preferably in the range of 50 000 to 250 000 g/mol.

The polymer (P1) may be present as a single/individual polymer or as a mixture of two or three individual polymers according to the definition of polymer (P1). It is preferred that the polymer (P1) contains a fragment according to general formula (II) 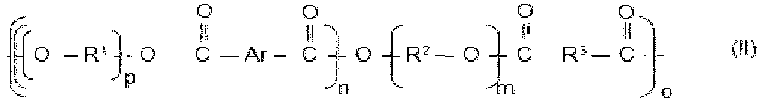 in which the variables are defined as follows:
- R¹: represents linear of branched C₂-C₁₀-alkylene radicals,
- Ar: represents aryl,
- R²: represents linear of branched C₂-C₁₀-alkylene radicals,
- R³: represents linear of branched C₁-C₁₀-alkylene radicals optionally substituted with at least one OH-group,
- p: is an integer having a value in the range of 1 to 20,
- n: is an integer having a value in the range of 1 to 10,
- m: is an integer having a value in the range of 1 to 20,
- o: is an integer having a value in the range of 1 to 100.

The variables of the fragments according to general formula (II) are preferably defined as follows:
- R¹: is 1,2-ethylene or 1,2-propylene, preferably 1,2-ethylene, and/or
- Ar: is phenylene or naphthylene, preferably 1,4-phenylene, and/or
- R²: is 1,2-ethylene or 1,2-propylene, preferably 1,2-ethylene, and/or
- R³: is methylene or 1,2-ethylene, optionally substituted with at least one OH-group, preferably R³ is 1,2-ethylene substituted with two OH-groups, and/or
- p: is 1, and/or
- n: is an integer having a value in the range of 1 to 3, preferably n is 1 or 2, and/or
- m: is an integer having a value in the range of 3 to 10, and/or
- o: is an integer having a value in the range of 1 to 30.

Even more preferably, the polymer (P1) contains a fragment according to general formula (IIa) 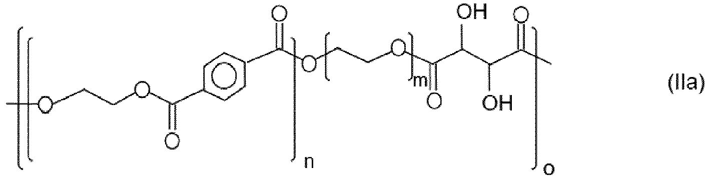 in which the variables are defined as follows:
- n: is an integer having a value in the range of 1 to 10,
- m: is an integer having a value in the range of 1 to 20,
- o: is an integer having a value in the range of 1 to 100.

The variables of the fragment according to formula (IIa) are preferably defined as follows:
- n: is an integer having a value in the range of 1 to 3, preferably n is 1 or 2, and/or
- m: is an integer having a value in the range of 3 to 10, and/or
- o: is an integer having a value in the range of 1 to 30.

Another subject-matter of the present invention is also a process as such for obtaining the above mentioned polymer (P1). The respective process as such comprises the steps a) to c) as defined above, including any preferred, more preferred etc. definitions.

Another subject-matter of the present invention is the use of at least one polymer (P1) as described above in laundry detergents, in cleaning compositions and/or in fabric and home care products.

A further subject-matter of the present invention is a laundry detergent, a cleaning composition and/or a fabric and home care product containing at least one polymer (P1) as described above.

Laundry detergents, cleaning compositions and/or fabric and home care products as such are known to a person skilled in the art. Any composition etc. known to a person skilled in the art, in connection with the respective use, can be employed within the context of the present invention.

The laundry detergent, the cleaning composition and/or the fabric and home care product according to the present invention are preferred, additionally containing at least one surfactant, preferably at least one polyether-containing surfactant.

In addition, the laundry detergents and cleaning compositions generally comprise surfactants and, if appropriate, other polymers as washing substances, builders and further customary ingredients, for example cobuilders, complexing agents, bleaches, standardizers, graying inhibitors, dye transfer inhibitors, enzymes and perfumes.

Detergent frame formulations being encompassed by the present invention are shown in the following table:

| | Liquid frame formulations |
|---|---|
| Linear alkyl benzene sulphonic acid | 5 to 20 % |
| Coco fatty acid K12-18 | 1 to 9 % |
| Fatty alcohol ether sulphate | 2 to 10 % |
| NaOH or mono ethanol amine | Upto pH 8 to 8.5 |
| Alcohol ethoxylate | 3 to 10 % |
| 1,2-Propylene glycol | 1 to 8 % |
| Ethanol | 0.5 to 4 % |
| Sodium citrate | 0 to 5% |
| water | Up to 90%, or: up to 100 % |

The laundry detergent, the cleaning composition and/or the fabric and home care product according to the present invention are preferred, wherein the at least one inventive polymer is present in an amount ranging from about 0.01% to about 20%, preferably from about 0.05% to 15%, more preferably from about 0.1% to about 10%, and most preferably from about 0.5% to about 5%, in relation to the total weight of such composition or product.

In addition, the laundry detergents and cleaning compositions generally comprise surfactants and, if appropriate, other polymers as washing substances, builders and further customary ingredients, for example co-builders, complexing agents, bleaches, standardizers, graying inhibitors, dye transfer inhibitors, enzymes and perfumes.

The inventive polymers of the present invention may be utilized in laundry detergents or cleaning compositions comprising a surfactant system comprising C10 C15 alkyl benzene sulfonates (LAS) and one or more co-surfactants selected from nonionic, cationic, anionic or mixtures thereof. The selection of co-surfactant may be dependent upon the desired benefit. In one embodiment, the co-surfactant is selected as a nonionic surfactant, preferably C12 C18 alkyl ethoxylates. In another embodiment, the co-surfactant is selected as an anionic surfactant, preferably C10-C18 alkyl alkoxy sulfates (AExS) wherein x is from 1 to 30. In another embodiment the co-surfactant is selected as a cationic surfactant, preferably dimethyl hydroxyethyl lauryl ammonium chloride. If the surfactant system comprises C10-C15 alkyl benzene sulfonates (LAS), the LAS is preferably used at levels ranging from about 9% to about 25%, or from about 13% to about 25%, or from about 15% to about 23% by weight of the composition.

The surfactant system may comprise from 0% to about 15%, or from about 0.1% to about 7%, or from about 1% to about 4% by weight of the composition of one or more of co-surfactants selected from a nonionic co-surfactant, cationic co-surfactant, anionic co-surfactant and any mixture thereof.
Non-limiting examples of nonionic co-surfactants include: C12 C18 alkyl ethoxylates, such as, NEODOL^{®} nonionic surfactants from Shell; C6-C12 alkyl phenol alkoxylates wherein the alkoxylate units are a mixture of ethyleneoxy and propyleneoxy units; C12 C18 alcohol and C6 C12 alkyl phenol condensates with ethylene oxide/propylene oxide block alkyl polyamine ethoxylates such as PLURONIC^{®} from BASF; C14 C22 mid-chain branched alcohols, BA, as discussed in US 6,150,322; C14 C22 mid-chain branched alkyl alkoxylates, BAEx, wherein x is from 1 to 30, as discussed in US 6,153,577, US 6,020,303 and US 6,093,856; alkylpolysaccharides as discussed in U.S. 4,565,647 Llenado, issued January 26, 1986; specifically alkylpolyglycosides as discussed in US 4,483,780 and US 4,483,779; polyhydroxy fatty acid amides as discussed in US 5,332,528; and ether capped poly(oxyalkylated) alcohol surfactants as discussed in US 6,482,994 and WO 01/42408.

Non-limiting examples of semi-polar nonionic co-surfactants include: water-soluble amine oxides containing one alkyl moiety of from about 10 to about 18 carbon atoms and 2 moieties selected from the group consisting of alkyl moieties and hydroxyalkyl moieties containing from about 1 to about 3 carbon atoms; water-soluble phosphine oxides containing one alkyl moiety of from about 10 to about 18 carbon atoms and 2 moieties selected from the group consisting of alkyl moieties and hydroxyalkyl moieties containing from about 1 to about 3 carbon atoms; and water-soluble sulfoxides containing one alkyl moiety of from about 10 to about 18 carbon atoms and a moiety selected from the group consisting of alkyl moieties and hydroxyalkyl moieties of from about 1 to about 3 carbon atoms. See WO 01/32816, US 4,681,704, and US 4,133,779.

Non-limiting examples of cationic co-surfactants include: the quaternary ammonium surfactants, which can have up to 26 carbon atoms include: alkoxylate quaternary ammonium (AQA) surfactants as discussed in US 6,136,769; dimethyl hydroxyethyl quaternary ammonium as discussed in US 6,004,922; dimethyl hydroxyethyl lauryl ammonium chloride; polyamine cationic surfactants as discussed in WO 98/35002, WO 98/35003, WO 98/35004, WO 98/35005, and WO 98/35006; cationic ester surfactants as discussed in US patents Nos. 4,228,042, 4,239,660 4,260,529 and US 6,022,844; and amino surfactants as discussed in US 6,221,825 and WO 00/47708, specifically amido propyldimethyl amine (APA).

Nonlimiting examples of anionic co-surfactants useful herein include: C10-C20 primary, branched chain and random alkyl sulfates (AS); C10-C18 secondary (2,3) alkyl sulfates; C10-C18 alkyl alkoxy sulfates (AExS) wherein x is from 1 to 30; C10-C18 alkyl alkoxy carboxylates comprising 1 to 5 ethoxy units; mid-chain branched alkyl sulfates as discussed in US 6,020,303 and US 6,060,443; mid-chain branched alkyl alkoxy sulfates as discussed in US 6,008,181 and US 6,020,303; modified alkylbenzene sulfonate (MLAS) as discussed in WO 99/05243, WO 99/05242 and WO 99/05244; methyl ester sulfonate (MES); and alpha-olefin sulfonate (AOS).

The present invention may also relate to compositions comprising the inventive polymers and a surfactant system comprising C8-C18 linear alkyl sulphonate surfactant and a co-surfactant. The compositions can be in any form, namely, in the form of a liquid; a solid such as a powder, granules, agglomerate, paste, tablet, pouches, bar, gel; an emulsion; types delivered in dual-compartment containers; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a consumer; and other homogeneous or multiphase consumer cleaning product forms.

In one embodiment, the cleaning composition of the present invention is a liquid or solid laundry detergent composition. In another embodiment, the cleaning composition of the present invention is a hard surface cleaning composition, preferably wherein the hard surface cleaning composition impregnates a nonwoven substrate. As used herein "impregnate" means that the hard surface cleaning composition is placed in contact with a nonwoven substrate such that at least a portion of the nonwoven substrate is penetrated by the hard surface cleaning composition, preferably the hard surface cleaning composition saturates the nonwoven substrate. The cleaning composition may also be utilized in car care compositions, for cleaning various surfaces such as hard wood, tile, ceramic, plastic, leather, metal, glass. This cleaning composition could be also designed to be used in a personal care and pet care compositions such as shampoo composition, body wash, liquid or solid soap and other cleaning composition in which surfactant comes into contact with free hardness and in all compositions that require hardness tolerant surfactant system, such as oil drilling compositions.
In another embodiment the cleaning composition is a dish cleaning composition, such as liquid hand dishwashing compositions, solid automatic dishwashing compositions, liquid automatic dishwashing compositions, and tab/unit dose forms of automatic dishwashing compositions.

Quite typically, cleaning compositions herein such as laundry detergents, laundry detergent additives, hard surface cleaners, synthetic and soap-based laundry bars, fabric softeners and fabric treatment liquids, solids and treatment articles of all kinds will require several adjuncts, though certain simply formulated products, such as bleach additives, may require only, for example, an oxygen bleaching agent and a surfactant as described herein. A comprehensive list of suitable laundry or cleaning adjunct materials can be found in WO 99/05242.

Common cleaning adjuncts include builders, enzymes, polymers not discussed above, bleaches, bleach activators, catalytic materials and the like excluding any materials already defined hereinabove. Other cleaning adjuncts herein can include suds boosters, suds suppressors (antifoams) and the like, diverse active ingredients or specialized materials such as dispersant polymers (e.g., from BASF Corp. or Rohm & Haas) other than those described above, color speckles, silver care, anti-tarnish and/or anti-corrosion agents, dyes, fillers, alkalinity sources, hydrotropes, anti-oxidants, enzyme stabilizing agents, pro-perfumes, perfumes, solubilizing agents, carriers, processing aids, pigments, and, for liquid formulations, solvents, chelating agents, dye transfer inhibiting agents, dispersants, brighteners, suds suppressors, dyes, structure elasticizing agents, fabric softeners, anti-abrasion agents, hydrotropes, processing aids, and other fabric care agents, surface and skin care agents. Suitable examples of such other cleaning adjuncts and levels of use are found in U.S. Patent Nos. 5,576,282, 6,306,812 B1 and 6,326,348 B1.

### Method of Use

The present invention includes a method for cleaning a targeted surface. As used herein "targeted surface" may include such surfaces such as fabric, dishes, glasses, and other cooking surfaces, hard surfaces, hair or skin. As used herein "hard surface" includes hard surfaces being found in a typical home such as hard wood, tile, ceramic, plastic, leather, metal, glass. Such method includes the steps of contacting the composition comprising the modified polyol compound, in neat form or diluted in wash liquor, with at least a portion of a targeted surface then optionally rinsing the targeted surface. Preferably the targeted surface is subjected to a washing step prior to the aforementioned optional rinsing step. For purposes of the present invention, washing includes, but is not limited to, scrubbing, wiping and mechanical agitation.

As will be appreciated by one skilled in the art, the cleaning compositions of the present invention are ideally suited for use in home care (hard surface cleaning compositions) and/or laundry applications.

The composition solution pH is chosen to be the most complimentary to a target surface to be cleaned spanning broad range of pH, from about 5 to about 11. For personal care such as skin and hair cleaning pH of such composition preferably has a pH from about 5 to about 8 for laundry cleaning compositions pH of from about 8 to about 10. The compositions are preferably employed at concentrations of from about 200 ppm to about 10,000 ppm in solution. The water temperatures preferably range from about 5 °C to about 100 °C.

For use in laundry cleaning compositions, the compositions are preferably employed at concentrations from about 200 ppm to about 10000 ppm in solution (or wash liquor). The water temperatures preferably range from about 5□C to about 60□C. The water to fabric ratio is preferably from about 1:1 to about 20:1.

The method may include the step of contacting a nonwoven substrate impregnated with an embodiment of the composition of the present invention. As used herein "nonwoven substrate" can comprise any conventionally fashioned nonwoven sheet or web having suitable basis weight, caliper (thickness), absorbency and strength characteristics. Examples of suitable commercially available nonwoven substrates include those marketed under the tradename SONTARA^{®} by DuPont and POLYWEB^{®} by James River Corp.

As will be appreciated by one skilled in the art, the cleaning compositions of the present invention are ideally suited for use in liquid dish cleaning compositions. The method for using a liquid dish composition of the present invention comprises the steps of contacting soiled dishes with an effective amount, typically from about 0.5 ml. to about 20 ml. (per 25 dishes being treated) of the liquid dish cleaning composition of the present invention diluted in water.
In a preferred embodiment the polymer P1 according to the present invention is used in a laundry detergent. Liquid laundry detergents according to the present invention are composed of:
0,05 - 20 % of at least one polymer P1
1 - 50% of surfactants
0,1 - 40 % of builders, cobuilders and/or chelating agents
0,1 - 50 % other adjuncts
water to sum up 100 %.

Preferred liquid laundry detergents according to the present invention are composed of:
0,2 - 6 % of at least one polymer P1
5 - 40 % of anionic surfactants selected from C10-C15- LAS and C10-C18 alkyl ether sulfate containing 1-5 ethylenoxy-units
1,5 - 10 % of nonioic surfactants selected from C10-C18-alkyl ethoxylates containing 3 - 10 ethylenoxy-units
2 - 20 % of soluble organic builders/ cobuilders selected from C10-C18 fatty acids, di- and tricarboxylic acids, hydroxy-di- and hydroxytricaboxylic acids and polycarboxylic acids
0,05 - 5 % of an enzyme system containing at least one protease
0,5 - 20 % of mono- or diols selected from ethanol, isopropanol, ethylenglycol, or propylenglyclol
0,1 - 20 % other adjuncts
water to add up to 100%

Solid laundry detergents (like e.g. powders, granules or tablets) according to the present invention are composed of:
0,05 - 20 % of at least one polymer P1
1 - 50% of surfactants
0,1 - 80 % of builders, cobuilders and/or chelating agents
0-50% fillers
0 - 40% bleach actives
0,1 - 30 % other adjuncts and/or water
wherein the sum of the ingredients adds up 100 %.

Preferred solid laundry detergents according to the present invention are composed of:
0,2 - 6 % of at least one polymer P1
5 - 30 % of anionic surfactants selected from C10-C15- LAS, C10-C18 alkylsulfates and C10-C18 alkyl ethersulfate containing 1-5 ethylenoxy-units
1,5 - 7,5 % of nonionic surfactants selected from C10-C18-alkyl ethoxylates containing 3 - 10 ethylenoxy-units
5 - 50 % of inorganic builders selected from sodium carbonate, sodiumbicarbonate, zeolites, soluble silicates, sodium sulfate
0,5 - 15 % of cobuilders selected from C10-C18 fatty acids, di- and tricarboxylic acids, hydroxydi- and hydroxytricarboxylic acids and polycarboxylic acids
0,1 - 5 % of an enzyme system containing at least one protease
0,5 - 20 % of mono- or diols selected from ethanol, isopropanol, ethylenglycol, or propylenglyclol
0,1 - 20 % other adjuncts
water to ad up to 100%

Another subject-matter of the present invention is the use of at least one inventive polymer in laundry detergents, in cleaning compositions and/or in fabric and home care products, wherein the inventive polymer employed is a polymer obtainable by the inventive process as disclosed herein.

Another subject is the use of the polymer P1 in detergent compositions, laundry detergents, in cleaning compositions and/or in fabric and home care products, which contain at least on enzyme, selected from proteases, lipases, cellulases, preferably being selected from proteases and/or lipases, more preferably proteases and lipases.

General formula for detergent compositions according to the invention are shown in the following table:

| | Liquid frame formulations |
|---|---|
| Linear alkyl benzene sulphonic acid | 0 to 30 % |
| Coco fatty acid | 1 to 12 % |
| Fatty alcohol ether sulphate | 0 to 25 % |
| NaOH or mono or triethanol amine | Up to pH 7,5 to 9,0 |
| Alcohol ethoxylate | 3 to 10 % |
| 1,2-Propylene glycol | 1 to 10 % |
| Ethanol | 0 to 4 % |
| Sodium citrate | 0 to 8 % |
| water | Up to 100 % |

The at least one inventive polymer may be added to such formulation(s) in suitable amounts as outlined herein.

Liquid frame formulations according to the invention are shown in the following two tables:

| **active** | | | | | | |
|---|---|---|---|---|---|---|
| **(numbers: % active)** | **F1** | **F2** | **F3** | **F4** | **F5** | **F6** |
| alcohol ethoxylat 7EO | 5.40 | 10.80 | 12.40 | 7.30 | 1.60 | 7.60 |
| Coco fatty acid K12-18 | 2.40 | 3.10 | 3.20 | 3.20 | 3.50 | 6.40 |
| Fatty alcohol ether sulphate | 5.40 | 8.80 | 7.10 | 7.10 | 5.40 | 14.00 |
| Linear alkyl benzene sulphonic acid | 5.50 | 0.00 | 14.50 | 15.50 | 10.70 | 0.00 |
| 1,2 Propandiol | 6.00 | 3.50 | 8.70 | 8.70 | 1.10 | 7.80 |
| Triethanolamine | | | | | | |
| Monoethanolamine | | | 4.00 | 4.30 | 0.30 | |
| NaOH | 2.20 | 1.10 | | | | 1.00 |
| Glycerol | | 0.80 | 3.00 | 2.80 | | |
| Ethanol | 2.00 | | | | 0.38 | 0.39 |
| Na citrate | 3.00 | 2.80 | 3.40 | 2.10 | 7.40 | 5.40 |
| Inventive Polymer (s) (total) | 0,1 - 5 | 0,1 - 5 | 0,1 - 5 | 0,1 - 5 | 0,1 - 5 | 0,1 - 5 |
| Polymers (other than inventive polymer(s)) | 0 - 5 | 0 - 5 | 0 - 5 | 0 - 5 | 0 - 5 | 0 - 5 |
| Protease | 0 - 1 | 0 - 1 | 0 - 1 | 0 - 1 | 0 - 1 | 0 - 1 |
| Amylase | 0 - 0,5 | 0 - 0,5 | 0 - 0,5 | 0 - 0,5 | 0 - 0,5 | 0 - 0,5 |
| Cellulase | 0 - 0,3 | 0 - 0,3 | 0 - 0,3 | 0 - 0,3 | 0 - 0,3 | 0 - 0,3 |
| Lipase | 0 - 0,2 | 0 - 0,2 | 0 - 0,2 | 0 - 0,2 | 0 - 0,2 | 0 - 0,2 |
| Mannanase | 0 - 0,2 | 0 - 0,2 | 0 - 0,2 | 0 - 0,2 | 0 - 0,2 | 0 - 0,2 |
| Pectat Lyase | 0 - 0,3 | 0 - 0,3 | 0 - 0,3 | 0 - 0,3 | 0 - 0,3 | 0 - 0,3 |
| water | to 100 | to 100 | to 100 | to 100 | to 100 | to 100 |

Liquid frame formulations according to the invention: - continued

| **active** | | | | | | | | |
|---|---|---|---|---|---|---|---|---|
| **(numbers: % active)** | **F7** | **F8** | **F9** | **F10** | **F11** | **F12** | **F13** | **F14** |
| alcohol ethoxylat 7EO | 3.80 | 0.30 | 13.30 | 8.00 | 5.70 | 20.00 | 9.20 | 29.00 |
| Coco fatty acid K12-18 | 2.80 | 3.00 | 1.70 | 1.80 | 2.50 | 5.00 | 8.60 | 10.40 |
| Fatty alcohol ether sulphate | 2.80 | 4.50 | 3.90 | 4.10 | | 10.00 | 22.20 | |
| Linear alkyl benzene sulphonic acid | 6.30 | 5.43 | 11.45 | 5.90 | 10.10 | 10.00 | 28.00 | 27.00 |
| 1,2 Propandiol | 0.50 | | 2.50 | 0.40 | 6.00 | 10.00 | 7.00 | 7.00 |
| Triethanolamine | | | | 8.10 | | | | |
| Monoethanolamine | 0.40 | 1.80 | | | | | 8.00 | 7.00 |
| NaOH | | | 2.20 | | 3.30 | 1.50 | | |
| Glycerol | | 0.60 | 0.20 | 1.90 | | | 7.00 | 10.00 |
| Ethanol | | | 1.84 | | | | | |
| Na citrate | 4.60 | 3.30 | 3.30 | 1.40 | | 1.50 | | |
| Inventive Polymer (s) (total) | 0,1 - 5 | 0,1 - 5 | 0,1 - 5 | 0,1 - 5 | 0,1 - 5 | 0,1 - 5 | 0,1 - 5 | 0,1 - 5 |
| Polymers (other than inventive polymer(s)) | 0 - 5 | 0 - 5 | 0 - 5 | 0 - 5 | 0 - 5 | 0 - 5 | 0 - 5 | 0 - 5 |
| Protease | 0 - 1 | 0 - 1 | 0 - 1 | 0 - 1 | 0 - 1 | 0 - 3 | 0 - 3 | 0 - 3 |
| Amylase | 0 - 0,5 | 0 - 0,5 | 0 - 0,5 | 0 - 0,5 | 0 - 0,5 | 0 - 0,5 | 0 - 0,5 | 0 - 0,5 |
| Cellulase | 0 - 0,3 | 0 - 0,3 | 0 - 0,3 | 0 - 0,3 | 0 - 0,3 | 0 - 0,3 | 0 - 0,3 | 0 - 0,3 |
| Lipase | 0 - 0,2 | 0 - 0,2 | 0 - 0,2 | 0 - 0,2 | 0 - 0,2 | 0 - 0,2 | 0 - 0,2 | 0 - 0,2 |
| Mannanase | 0 - 0,2 | 0 - 0,2 | 0 - 0,2 | 0 - 0,2 | 0 - 0,2 | 0 - 0,2 | 0 - 0,2 | 0 - 0,2 |
| Pectat Lyase | 0 - 0,3 | 0 - 0,3 | 0 - 0,3 | 0 - 0,3 | 0 - 0,3 | 0 - 0,3 | 0 - 0,3 | 0 - 0,3 |
| water | to 100 | to 100 | to 100 | to 100 | to 100 | to 100 | to 100 | to 100 |

Powder frame formulations according to the invention are shown in the following tables:

| | Bleach free Powder | | | | | |
|---|---|---|---|---|---|---|
| Alcohol ethoxylate 7EO | 0.6 | 0 | 1 | 0 | 0 | 5.2 |
| Coco fatty acid K12-18 | 1.2 | 0 | 0 | 0 | 0 | 0 |
| Fatty alcohol ether sulphate | 1.5 | 0 | 0 | 0 | 0 | 6 |
| Linear alkyl benzene sulphonic acid | 12.1 | 11.2 | 13.6 | 21.9 | 18.7 | 12.7 |
| Bleach activator | 0 | 0 | 0 | 0 | 0 | 0 |
| Percarbonate | 0 | 0 | 0 | 0 | 0 | 0 |
| AcetateNa | 0 | 0 | 0 | 0.1 | 0 | 0.1 |
| CitrateNa | 0 | 0 | 0 | 0 | 0 | 14 |
| Na Silicate | 27.9 | 5.8 | 6.6 | 2 | 15 | 20.3 |
| Na Carbonate | 17.2 | 35 | 37.3 | 30.1 | 37 | 1 |
| Na Phospahte | 0 | 0 | 0 | 14 | 0.3 | 0 |
| Na Hydrogencarbonate | 0.7 | 0.9 | 0.5 | 2.7 | 0.4 | 10.5 |
| Zeolite4A | 4.2 | 0.1 | 5.1 | 10.2 | 1.8 | 11.6 |
| HEDP | 0 | 0 | 0 | 0 | 0 | 0.13 |
| MGDA | 0 | 1.1 | 0 | 0 | 0 | 0 |
| Cellulase | 0 - 0.5 | 0 - 0.5 | 0 - 0.5 | 0 - 0.5 | 0 - 0.5 | 0 - 0.5 |
| Lipase | 0 - 0.4 | 0 - 0.4 | 0 - 0.4 | 0 - 0.4 | 0 - 0.4 | 0 - 0.4 |
| Mannanase | 0 - 0.4 | 0 - 0.4 | 0 - 0.4 | 0 - 0.4 | 0 - 0.4 | 0 - 0.4 |
| Protease | 0 - 1.5 | 0 - 1.5 | 0 - 1.5 | 0 - 1.5 | 0 - 1.5 | 0 - 1.5 |
| Amylase | 0 - 0.5 | 0 - 0.5 | 0 - 0.5 | 0 - 0.5 | 0 - 0.5 | 0 - 0.5 |
| Na Sulfate | 30.8 | 1.3 | 33 | 11 | 22 | 3 |
| Na Chloride | 0.2 | 43 | 0.1 | 0 | 0.1 | 0.1 |
| optical brightener | 0.02 | 0 | | 0.1 | 0.06 | |
| Polymers (other than inventive polymer(s)) | 1 | 1,5 | 0.2 | 2 | 0.5 | 3 |
| Inventive Polymer(s) (total) | 0,1 -5 | 0,1 - 5 | 0,1 - 5 | 0,1 - 5 | 0,1 - 5 | 0,1 - 5 |

Powder frame formulations according to the invention: - continued

| | Bleach containing Powder | | | | | |
|---|---|---|---|---|---|---|
| Alcohol ethoxylate 7EO | 1.2 | 5 | 4 | 0.5 | 0.5 | 0 |
| Coco fatty acid K12-18 | 0 | 0 | 0 | 0.3 | 0 | 0.6 |
| Fatty alcohol ether sulphate | 0 | 3.9 | 4.4 | 1.6 | 0 | 0 |
| Linear alkyl benzene sulphonic acid | 7.6 | 12.1 | 11.5 | 12.2 | 6.5 | 10.4 |
| Bleach activator | 0.2 | 9.5 | 9.5 | 0.5 | 0.8 | 2.2 |
| Percarbonate | 3.6 | 19.4 | 16.6 | 2.2 | 11.5 | 5.8 |
| AcetateNa | 0 | 6.7 | 7.1 | 0.3 | 1 | 0.7 |
| CitrateNa | 0 | 1.6 | 8.2 | 0.3 | 0.9 | 1.7 |
| Na Silicate | 3.6 | 11.3 | 16.4 | 10.2 | 9.1 | 16.5 |
| Na Carbonate | 21.6 | 8.7 | 1.4 | 8 | 22.9 | 14.8 |
| Na Phospahte | 0 | 0 | 0 | 0 | 0 | 0 |
| Na Hydrogencarbonate | 0.2 | 2.8 | 1.6 | 0.8 | 0.5 | 0.5 |
| Zeolite4A | 1.6 | 1.4 | 2.4 | 1.6 | 1.8 | 2.3 |
| HEDP | 0 | 0.27 | 0.16 | 0 | 0 | 0.17 |
| MGDA | 0 | 0 | 0 | 0 | 0 | 0 |
| Cellulase | 0 - 0.5 | 0 - 0.5 | 0 - 0.5 | 0 - 0.5 | 0 - 0.5 | 0 - 0.5 |
| Lipase | 0 - 0.4 | 0 - 0.4 | 0 - 0.4 | 0 - 0.4 | 0 - 0.4 | 0 - 0.4 |
| Mannanase | 0 - 0.4 | 0 - 0.4 | 0 - 0.4 | 0 - 0.4 | 0 - 0.4 | 0 - 0.4 |
| Protease | 0 - 1.5 | 0 - 1.5 | 0 - 1.5 | 0 - 1.5 | 0 - 1.5 | 0 - 1.5 |
| Amylase | 0 - 0.5 | 0 - 0.5 | 0 - 0.5 | 0 - 0.5 | 0 - 0.5 | 0 - 0.5 |
| Na Sulfate | 51 | 4 | 6 | 57 | 38 | 37 |
| Na Chloride | 1 | 1 | 0.5 | 1.2 | 0.2 | 1 |
| optical brightener | | 0.29 | 0.1 | 0.23 | 0.13 | 0.19 |
| Polymers (other than inventive polymer(s)) | 2.2 | 9.2 | 2.2 | 0.7 | 1,5 | 0.4 |
| Inventive Polymer(s) (total) | 0,1 -5 | 0,1 - 5 | 0,1 - 5 | 0,1 - 5 | 0,1 - 5 | 0,1 - 5 |

A further subject-matter of the present invention is, therefore, a laundry detergent, a cleaning composition and/or a fabric and home care product containing at least one inventive polymer as obtainable according to the process described herein. More preferably, the detergent composition, cleaning composition or laundry detergent is a formulation according to any one of the previous described powder frame formulations, Liquid frame formulations or the general formula for detergent compositions as shown in the tables and description above.

It is preferred, that within the respective laundry detergent, cleaning composition and/or fabric and home care product, the at least one inventive polymer as obtainable according to the process described herein is present in an amount ranging from about 0.01% to about 20%, preferably from about 0.05% to 15%, more preferably from about 0.1% to about 10%, and most preferably from about 0.5% to about 5%, in relation to the total weight of such composition or product.

Furthermore, this specific subject-matter also includes all preferred, more preferred etc. definitions/features as mentioned above in connection with the definition of the inventive polymer as obtainable according to the process described herein as such. The following examples shall further illustrate the present invention without restricting the scope of the invention.

### Examples

K-value measures the relative viscosity of dilute polymer solutions and is a relative measure of the average molecular weight. As the average molecular weight of the polymer increases for a particular polymer, the K-value tends to also increase. The K-value is determined in a 3% by weight NaCl solution at 23°C and a polymer concentration of 1% polymer according to the method of H. Fikentscher in "Cellulosechemie", 1932, 13, 58.

The number average molecular weight (Mₙ), the weight average molecular weight (M_{w}) and the polydispersity M_{w}/Mₙ of the inventive polymers were determined by gel permeation chromatography in tetrahydrofuran. The mobile phase (eluent) used was tetrahydrofuran comprising 0.035 mol/L diethanolamine. The concentration of polymer in tetrahydrofuran was 2.0 mg per mL. After filtration (pore size 0.2 µm), 100 µL of this solution were injected into the GPC system. Four different columns (heated to 60°C) were used for separation (SDV precolumn, SDV 1000A, SDV 100000A, SDV 1000000A). The GPC system was operated at a flow rate of 1 mL per min. A DRI Agilent 1100 was used as the detection system. Poly(ethylene glycol) (PEG) standards (PL) having a molecular weight Mₙ from 106 to 1 378 000 g/mol were used for the calibration.

### Example 1 (also "Ex.1")

1a) PET hydrolysis: recycled PET (600 g, 2.525 mol), Pluriol E 600 (1873.34 g, 2.525 mol) and Ti(IV)isopropoxide. (6.0 g, 1% of PET) were placed into a 3I glass reactor and slowly heated to 220°C under N₂-atmosphere. The hydrolysis reaction was carried out overnight (16 h) and all the PET flakes were dissolved. GPC: Mn = 6980, Mw = 15800, PDI (Mw/Mn) = 2,26.
1b) "Polymer (P1)" of Ex.1: Hydrolyzed PET obtained in example 1a) (185.95 g, 0.234 mol) and L-tartaric acid (35.15 g, 0.234 mol) were taken in four neck roundbottom flask and slowly heated to 130 to 140°C under N₂-atmosphere. At this temperature, distillation of water started under vacuum (40 mbar), reaction was monitored by measuring acid number time to time (conversion = 68.3% after 5 h). Reaction was continued on the second day for 7,5 h at 140 to 150°C and 40 mbar (conversion = 86%). Reaction was continued on the third day for further 3 h at 160°C and 40 mbar till acid number was 11.1 - conversion = 90%. Total reaction time was 16.25 h. K-value (NMP): 34.2, GPC: Mn = 39600, Mw = 217000, PDI (Mw/Mn) = 5.9.

**Table 1: solubility of polymer of Ex.1**

| Experiment number | Chemistry | Solubility | | | | | | |
|---|---|---|---|---|---|---|---|---|
| | | Water | Water + NaOH | Water + TEA | NMP | Acetone | EtOH | |
| Ex.1 | PET: Pluriol E600: tartaric acid | + | + | + | + | + | + | |

### Examples 1 to 6 - overview

Following the above same synthesis procedure (PET hydrolysis with Monomer 2 and then polymerization with monomer 3) similar polymers were synthesized as shown in Table 2. These polymers are also behaving in the similar way for laundry washing test, biodegradability test and hydrolysis stability test respectively.
Polymer of Ex.1 is included into the table for a comparison to Ex.2 -6.

**Table 2: sets of polymers synthesized from PET**

| Poly mer | Mon omer 1 | Monome r1 (mol%) | Monomer 2 | Monomer 2 (mol%) | Monomer 3 | Monomer 3 (mol%) | Biodegrada bility |
|---|---|---|---|---|---|---|---|
| Ex.1 | PET | 0.234 | Pluriol E600 | 0.234 | Tartaric acid | 0.234 | 80% |
| Ex.2 | PET | 0.234 | Pluriol E600 | 0.234 | Citric acid | 0.234 | |
| Ex.3 | PET | 0.234 | Pluriol E600 | 0.234 | 1,2,3,4 Butanetetraca rboxylic acid | 0.234 | |
| Ex.4 | PET | 0.234 | Pluriol E1000 | 0.234 | Tartaric acid | 0.234 | 88% |
| Ex.5 | PET | 0.234 | Pluriol E1000 | 0.234 | Adipic acid | 0.234 | 80% |
| Ex.6 | PET | 0.312 | Glycerol | 0.312 | Citric acid | 0.624 | 63% |

Polymer used as benchmark (see Table 8): 25 percent biodegradation.

### Application test in Launder-O-meter

The washing performance for the selected polymers was determined as follows: The L*, a* b* values of the single stains are measured before wash with a MACH 5 from CFT/Colour consult. Then the fabrics are washed together with cotton ballast fabric and 20 steel balls at 30 °C in detergent formulation with the selected polymers. After the wash the fabrics are rinsed, spin-dried and dried in the air.
The washing performance for the single stains is determined by measuring the L*, a* b* values with a MACH 5 from CFT/Colour consult after drying. The dE value is calculated from the single values before and after wash. The higher the value, the better the performance.

The washing conditions are shown in Table 3, the results in Table 4.

| Table 3: Washing conditions | |
|---|---|
| Test equipment | Launder-o-meter, LP2 Typ, SDL Atlas Inc., USA |
| Washing liquor | 250 ml |
| Washing time/temperature | 20 min at 30 °C |
| Dosage | 4 g detergent/L |
| Fabric/liquor ratio | 1 : 12,5 |
| Washing cycles | 1 |
| Water hardness | 2,5 mmol/l Ca2+ : Mg2+ : HCO3- 4:1:8 |
| Ballast fabric | 2,5 g cotton fabric 283 |
| Sum ballast + soiled fabric | 20 g |
| Soiled fabric | CFT-C-S 62 ¹⁾; wfk 20 D ²⁾ |

| | |
|---|---|
| 1) CFT-C-S 62, cotton fabric soiled with lard 2) wfk 20 D, polyester/cotton fabric soiled with sebum 1) Producer: Center for Testmaterials BV, NL-3130 AC Vlaardingen 2) Producer: wfk Testgewebe GmbH, D-41379 Brueggen | |

**Table 4: Washing results for 4 g detergent/L, washing temperature 25 °C or 40 °C, Polymer dosage: 3 %; delta delta E (detergent with polymer - detergent)**

| polymers | CFT-C-S 62 | wfk 20 D | wfk 20 D, 40 °C |
|---|---|---|---|
| Polymer Ex.4 | 4,2 | 2,1 | 1,8 |
| Polymer Ex.5 | 2,3 | 3,6 | 3,2 |
| Polymer Ex.6 | 3,9 | -0,7 | -0,8 |

### Application test for washing machine

The washing performance for the selected polymers was determined as follows.
The L*, a* b* values of the single stains on the multisoil monitors are measured before wash with a MACH 5 from CFT/Colour consult. Then the monitors are washed together with cotton ballast fabric (3.5 kg) and 1 soil ballast sheet wfk SBL 2004 in a Miele Household washing machine with cotton program short 30 °C. After the wash the fabrics are dried in the air.
The washing performance for the single stains is determined by measuring the L*, a* b* values with a MACH 5 from CFT/Colour consult after drying. The dE value is calculated from the single values before and after wash. The higher the value, the better the performance.
The washing conditions are shown in Table 5, the results in Table 6.

**Table 5: Washing conditions:**

| Test equipment | Miele Softtronic W1935 WTL |
|---|---|
| Washing program | Cotton short 30 °C, 1200 U/min. |
| Dosage | 60 ml Test detergent |
| Dosage polymer | 3% |
| Washing cycles | 1 (2 replicates) |
| Water hardness | 2,5 mmol/l Ca2+ : Mg2+ : HCO3- 4:1:8 |
| Ballast fabric | 3,5 kg cotton towels; 1 SBL 2004 ³⁾ |
| soiled fabric | CFT-C-S 62 ¹⁾; wfk 20 D ²⁾ |

| | |
|---|---|
| Annotation to Table 5: 1) CFT-CS 62, cotton fabric soiled with lard 2) wfk 20 D, polyester/cotton fabric soiled with sebum 1) Producer: Center for Testmaterials BV, NL-3130 AC Vlaardingen 2),3) Producer: wfk Testgewebe GmbH, Christenfeld 10, D-41379 Brueggen | |

**Table 6: Washing results delta delta E (detergent with polymer - detergent)**

| polymers | CFT-CS 62 | Wfk 20 D |
|---|---|---|
| Polymer Ex.1 | 0,7 | 2,4 |
| Polymer Ex.2 | 0,1 | 2,1 |
| Polymer Ex.3 | 0,8 | -0,4 |
| Polymer Ex.4 | 0,1 | 2,3 |
| Polymer Ex.5 | 2,3 | 2,4 |
| Polymer Ex.6 | -1,1 | -0,3 |

### Test method for anti-greying

The anti-greying performance for the selected polymers was determined as follows.
Several white test swatches are washed together with 2,5 g EMPA 101/2,5 g SBL 2004 and 20 steel balls at 40 °C in water with the selected polymers. After the wash the test fabrics are rinsed and spin-dried. This wash cycle is repeated two times with new soiled fabric and new wash liquor. After the third wash the test fabrics are rinsed, spin-dried and dried in the air.
The antigreying performance is determined by measuring the remission value (R%) of the soiled fabric before and after wash with the spectrophotometer from Fa. Datacolor (Elrepho 2000) at 460 nm. The higher the value, the better is the performance.

The washing conditions are shown in Table 7, the results in Table 8.

**Table 7: Washing conditions:**

| Test equipment | Launder-o-meter, LP2 Typ, SDL Atlas Inc., USA |
|---|---|
| Washing liquor | 250 ml |
| Washing time/temperature | 20 min at 40 °C |
| Detergent dosage | 2 g/L |
| Polymer dosage | 1 % |
| Fabric/liquor ratio | 1 : 10 |
| Washing cycles | 3 |
| Water hardness | 2,5 mmol/l Ca2+ : Mg2+ : HCO3- 4:1:8 |
| Soiling fabric | 2,5 g EMPA 1011)/2,5 g SBL 20045) |
| Sum test + soiled fabric | 20 g |
| White test fabric, each 10 x 10 cm | wfk 10A, wfk 80A, wfk12A, EMPA 221 ¹⁾; wfk 20A ²⁾; wfk 30A ³⁾; EMPA 406 ⁴⁾ |

| | |
|---|---|
| 1) Cotton fabrics 2) wfk 20 A Polyester/cotton 3) wfk 30 A Polyester 4) EMPA 406 Polyamid 1),2),3),5) producer: wfk Testgewebe GmbH, Brüggen, Deutschland 1),4) producer: EMPA Testmaterialien AG, Sankt Gallen, Schweiz | |

**Table 8: Washing results; delta R% (detergent with polymer - detergent)**

| polymers | Wfk 20A | Wfk 30 A |
|---|---|---|
| Benchmark (not bio-degradable)¹⁾ | 4,3 | 4,9 |
| Polymer Ex.4 | 3,3 | 4,0 |
| Polymer Ex.5 | 3,5 | 3,8 |
| Polymer Ex.6 | 1,4 | 1,0 |

| | | |
|---|---|---|
| ¹⁾ graft polymer of vinyl acetate on polyethylene glycol (60wt% Vac on 40wt% PEG6000) | | |

### Biodegradability Test

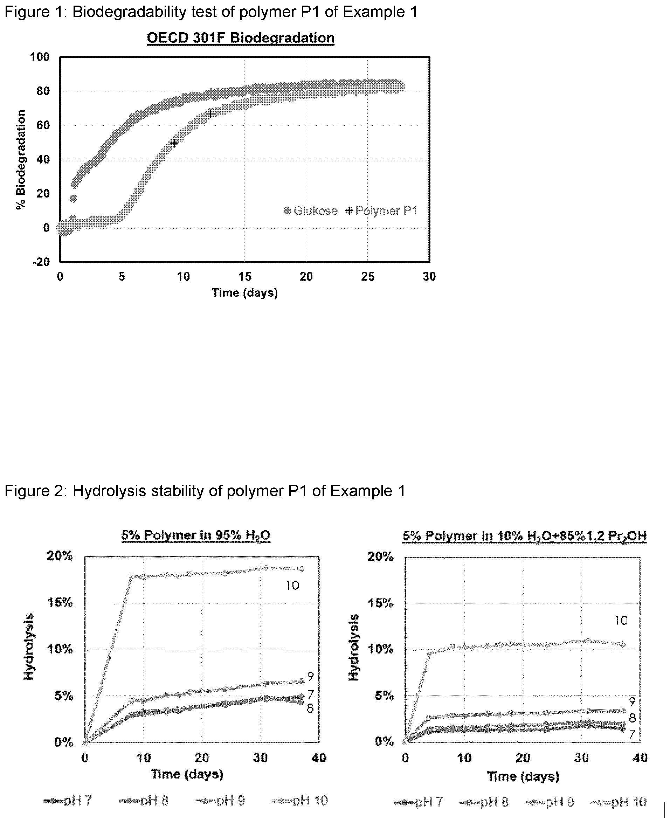

Biodegradability was checked for polymer of Ex. 1-6 in wastewater. Results show polymer of Ex.1 is ∼ 80% biodegradable after 28 days using the OECD 301F test method. Other inventive examples are shown in Table 2 above. All samples were tested in triplicate and compared to glucose as a positive control (see Figure 1 for result on Ex.1).

### Hydrolysis Stability of polymer of Ex.1

In general, polyesters show poor hydrolytic stability in basic medium. As liquid detergent formulation also has basic pH so it is necessary to check the hydrolysis stability of polymer in basic medium.

Hydrolysis stability was checked under four different pH (7, 8, 9 and 10)-conditions with two different solvent systems to mimic the medium of current available liquid detergent in market: 1) 5% Polymer in 95% H₂O - to mimic the condition of normal liquid detergent, and 2) 5% Polymer in 10% H2O + 85% 1,2-Pr2OH - to mimic the condition of concentrated liquid detergent. In both cases, hydrolysis stability of polymer of Ex.1 from pH 7-9 is excellent and thus suitable for use in detergents (see Figure 2). Other inventive examples show a similar if not identical behavior.

## Claims

1. A polymer (P1) obtainable by a process comprising the steps a) to c) as follows:
a) providing a polymer (P2) obtainable by polymerization of i) at least one first dicarboxylic acid (A1) or an anhydride, an ester or a salt thereof and ii) at least one first diol (D1),
b) hydrolyzing the polymer (P2) with at least one second diol (D2) at a temperature in the range of 100 to 300°C in the presence of a catalyst in order to obtain a hydrolyzed polymer (P3),
c) reacting the hydrolyzed polymer (P3) with at least one second dicarboxylic acid (A2) or an anhydride, an ester or a salt thereof in order to obtain the polymer (P1), wherein the second dicarboxylic acid (A2) is different to the first dicarboxylic acid (A1) employed in step a).

2. The polymer (P1) according to claim 1, wherein in step a)
i) the first dicarboxylic acid (A1) is an aromatic dicarboxylic acid optionally substituted with at least one C₁-C₁₀-alkyl substituent on its aromatic fragment or an anhydride, an ester or a salt thereof, preferably selected from terephthalic acid, phthalic acid, isophthalic acid or an anhydride, an ester or a salt of the before mentioned acids, most preferably terephthalic acid or an ester thereof, and/or
ii) the first diol (D1) is selected from C₂-C₁₀-diol or a polyalkylene glycol, preferably the first diol (D1) is 1,2-ethane diol, and/or
iii) the polymer (P2) is polyethylene terephthalate (PET) or recycled polyethylene terephthalate (recycled PET), preferably recycled PET.

3. The polymer (P1) according to claims 1 or 2, wherein in step b)
i) the second diol (D2) is selected from C₂-C₁₀-diol or a polyalkylene glycol, preferably selected from 1,2-propane diol, 1,3-propane diol or a polyethylene glycol, more preferably selected from polyethylene glycol with a weight-average molecular weight in the range from 100 to 2 000 g/mol, and most preferably selected from polyethylene glycol with a weight-average molecular weight in the range from 150 to 700 g/mol, and/or
ii) the temperature is in the range of 150 to 250°C, more preferably in the range of 200 to 230°C, and/or
iii) the catalyst is selected from an aluminum-based catalyst, a titanium-based catalyst or an alkali acetate, preferably the catalyst is Titanium (IV) isopropoxide , and/or
iv) the hydrolyzation is carried out in a time range of 5 to 25 hours and/or under inert gas, and/or
v) the second diol (D2) is different to the first diol (D1) employed in step a).

4. The polymer (P1) according to any of claims 1 to 3, wherein in step c)
i) the second dicarboxylic acid (A2) is a linear or a branched C₁-C₁₀-alkylene dicarboxylic acid optionally substituted with at least one OH-group or an anhydride, an ester or a salt thereof, preferably selected from tartaric acid, succinic acid, adipic acid or an anhydride, an ester or a salt thereof, most preferably the second dicarboxylic acid (A2) is tartaric acid, and/or
ii) the reaction is carried out in a time range of 5 to 40 hours, and/or
iii) the temperature is in the range of 80 to 200°C, more preferably in the range of 120 to 170°C, and/or
iv) the reaction is carried out under inert gas and/or vacuum condition.

5. The polymer (P1) according to any of claims 1 to 4 having a weight average molecular weight M_{w} in the range of 50 000 to 1 000 000 g/mol, preferably in the range of 50 000 to 500 000 g/mol, and most preferably in the range of 50 000 to 250 000 g/mol.

6. The polymer (P1) according to any of claims 1 to 5 containing a fragment according to general formula (II) 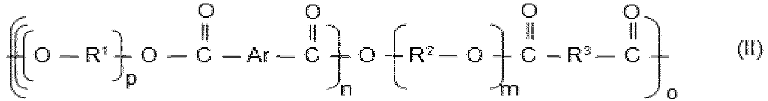 in which the variables are defined as follows:
R¹ represents linear of branched C₂-C₁₀-alkylene radicals,
Ar represents aryl,
R² represents linear of branched C₂-C₁₀-alkylene radicals,
R³ represents linear of branched C₁-C₁₀-alkylene radicals optionally substituted with at least one OH-group,
p is an integer having a value in the range of 1 to 20,
n is an integer having a value in the range of 1 to 10,
m is an integer having a value in the range of 1 to 20,
o is an integer having a value in the range of 1 to 100.

7. The polymer (P1) according to claim 6, wherein
R¹ is 1,2-ethylene or 1,2-propylene, preferably 1,2-ethylene, and/or
Ar is phenylene or naphthylene, preferably 1,4-phenylene, and/or
R² is 1,2-ethylene or 1,2-propylene, preferably 1,2 ethylene, and/or
R³ is methylene or 1,2-ethylene, optionally substituted with at least one OH-group, preferably R³ is 1,2-ethylene substituted with two OH-groups, and/or
p is 1, and/or
n is an integer having a value in the range of 1 to 3, preferably n is 1 or 2, and/or
m is an integer having a value in the range of 3 to 10, and/or
o is an integer having a value in the range of 1 to 30.

8. The polymer (P1) according to claims 6 or 7, containing a fragment according to general formula (IIa) 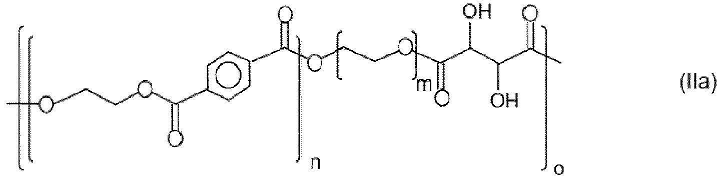 in which the variables are defined as follows:
n is an integer having a value in the range of 1 to 10,
m is an integer having a value in the range of 1 to 20,
o is an integer having a value in the range of 1 to 100.

9. The polymer (P1) according to claim 8, wherein
n is an integer having a value in the range of 1 to 3, preferably n is 1 or 2, and/or
m is an integer having a value in the range of 3 to 10, and/or
o is an integer having a value in the range of 1 to 30.

10. The polymer (P1) according to any of claims 1 to 6, wherein the hydrolyzed polymer (P2) obtained in step b) comprises at least one component according to general formula (I) 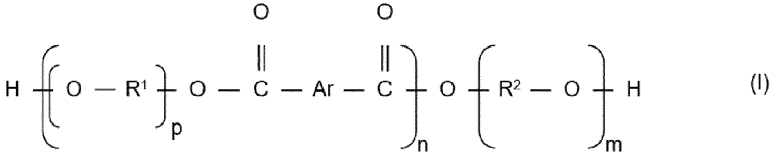 in which the variables are defined as follows:
R¹ represents linear of branched C₂-C₁₀-alkylene radicals,
Ar represents aryl,
R² represents linear of branched C₂-C₁₀-alkylene radicals,
p is an integer having a value in the range of 1 to 20,
n is an integer having a value in the range of 1 to 5,
m is an integer having a value in the range of 1 to 20.

11. The polymer (P1) according to claim 10, wherein
R¹ is 1,2-ethylene or 1,2-propylene, preferably 1,2-ethylene,
Ar is phenylene or naphthylene, preferably 1,4-phenylene,
R² is 1,2-ethylene or 1,2-propylene, preferably 1,2-ethylene,
p is 1,
n is an integer having a value in the range of 1 to 3, preferably n is 1 or 2,
m is an integer having a value in the range of 3 to 10.

12. The polymer (P1) according to claims 10 or 11, wherein the hydrolyzed polymer (P2) obtained in step b) comprises at least one component according to general formula (Ia) 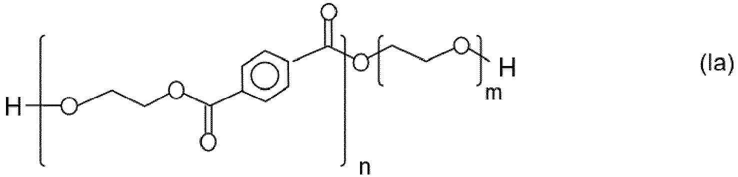 in which the variables are defined as follows:
n is an integer having a value in the range of 1 to 5,
m is an integer having a value in the range of 1 to 20.

13. Use of at least one polymer (P1) according to any of claims 1 to 12 in laundry detergents, in cleaning compositions and/or in fabric and home care products.

14. A laundry detergent, a cleaning composition and/or a fabric and home care product, containing at least one polymer (P1) according to any of claims 1 to 12.

15. The laundry detergent, the cleaning composition and/or the fabric and home care product according to claim 14, additionally containing at least one surfactant and optionally at least one enzyme, preferably at least one polyether-containing surfactant.
